# FASCICULE DE BREVET EUROPEEN

(11) **EP 2 295 782 B1**
(45) Date de publication et mention de la délivrance du brevet: **25.07.2012**
(21) Numéro de dépôt: 10175631.0
(22) Date de dépôt: 07.09.2010
(51) Int. Cl.: F02M 35/022, F02M 35/14

(54) **Dispositif d'atténuation acoustique pour ligne d'admission d'un moteur thermique, et ligne d'admission l'incorporant**
Schalldämpfervorrichtung für eine Ansaugleitung eines thermischen Motors und Ansaugleitung mit eingebauter Schalldämpfervorrichtung
Silencing device for an intake line of a thermal engine and intake line incorporating a silencing device

(30) Priorité: 11.09.2009 FR 0904336
(43) Date de publication de la demande: 16.03.2011
(73) Titulaire: HUTCHINSON, 75008 Paris (FR)
(72) Inventeur: Caliskan, Alper, 45140 St Jean de la Ruelle (FR)
(74) Mandataire: Bolinches, Michel Jean-Marie

(56) Documents cités:
- EP-A1- 1 795 733
- EP-A2- 1 128 071
- EP-B1- 1 352 172
- DE-A1- 19 956 172
- FR-A1- 2 895 030
- JP-A- 8 090 641
- JP-A- 2000 240 520
- JP-A- 2007 016 652
- US-A- 3 323 613

## Description

La présente invention concerne un dispositif d'atténuation acoustique pour une ligne d'admission d'un moteur thermique à combustion interne, tel qu'un moteur turbocompressé pour véhicule automobile, et une telle ligne d'admission l'incorporant. L'invention s'applique à un tel dispositif d'atténuation à chambre(s) résonante(s) de type résonateur(s) de Helmholtz.

De manière connue, les dispositifs d'atténuation acoustique de lignes d'admission pour moteurs turbocompressés de véhicule automobile comportent une conduite qui est destinée à être parcourue par de l'air sous pression chargé d'huile et dont les extrémités d'entrée et de sortie d'air sont intégrées à cette ligne d'admission. On peut distinguer essentiellement deux types de ces dispositifs, comprenant :
- ceux à enveloppe tubulaire radialement externe avec les portions d'extrémités de laquelle est solidarisée une structure de conduite radialement interne formant deux chambres annulaires de résonance avec deux renflements respectifs de l'enveloppe, comme par exemple décrit dans le document DE-A1-199 56 172, et
- ceux à résonateurs de Helmholtz qui sont agencés radialement à l'extérieur d'une conduite de circulation d'air en étant séparés entre eux par des cloisons transversales et/ou longitudinales par rapport à la conduite et qui communiquent avec celle-ci par des ouvertures formées dans sa paroi, comme par exemple illustré dans le document EP-B-1 352 172 et le document EP 1 795 733 A1.

Un inconvénient majeur des dispositifs d'atténuation connus de type à chambres annulaires de résonance réside dans leur encombrement relativement important ainsi que dans le nombre réduit de chambres de résonance formées qui est généralement limité à deux, ce qui pénalise les performances acoustiques pour une longueur de dispositif donnée.

Quant aux dispositifs d'atténuation connus de type à résonateurs de Helmholtz, ils présentent notamment l'inconvénient de procurer à plus ou moins long terme une atténuation acoustique insatisfaisante, tant pour les bruits de souffle générés par le moteur turbocompressé (se traduisant par des pulsations de pression dans les basses fréquences allant typiquement de 1300 à 2000 Hz environ) que pour les bruits de sifflement également générés par ce moteur (hautes fréquences au-delà de 2500 Hz environ).

Ces dispositifs à résonateurs de Helmholtz présentent également parfois l'inconvénient de requérir la soudure de plusieurs parties en matière plastique entre elles, comme par exemple la soudure d'un couvercle sur la paroi de la ou des chambre(s) de résonance, ce qui pénalise le procédé de fabrication du dispositif en termes de propreté, de lourdeur de mise en oeuvre et de coût en nuisant en outre potentiellement à la résistance à la pression et à la performance acoustique du dispositif, notamment en raison des difficultés de maîtrise des tolérances géométriques et/ou des déformations de la matière plastique soudée sous l'effet de la température pouvant générer des fuites d'air.

Un but de la présente invention est de proposer un dispositif d'atténuation acoustique pour une ligne d'admission d'un moteur thermique à combustion interne, tel qu'un moteur turbocompressé pour véhicule automobile, qui remédie à l'ensemble de ces inconvénients, ce dispositif étant destiné à être parcouru par un fluide gazeux sous pression et comportant :
- une structure de conduite qui présente une paroi tubulaire se terminant par deux extrémités respectivement d'entrée et de sortie du fluide aptes à être intégrées à ladite ligne d'admission, et
- au moins une chambre de résonance formant résonateur de Helmholtz qui est agencée à l'extérieur de cette structure de conduite et qui communique avec celle-ci par au moins une ouverture formée dans ladite paroi pour le passage dudit fluide, la ou chaque chambre étant délimitée axialement par deux cloisons sensiblement transversales à la direction axiale de cette structure.

A cet effet, un dispositif selon l'invention est tel que la ou chaque chambre de résonance comprend en outre au moins un orifice d'évacuation par gravité de condensats entraînés par le fluide, tels que de l'huile, orifice qui est formé dans ladite paroi à proximité immédiate de l'une desdites cloisons transversales, la ou chaque chambre étant délimitée transversalement par deux parois longitudinales qui s'étendent parallèlement à la direction axiale de la structure et qui sont reliées entre elles par ces cloisons transversales en formant un boîtier qui est fermé de manière étanche au fluide par un couvercle formé d'un seul tenant avec ce boîtier.

On notera que le ou chaque orifice d'évacuation de condensats prévu dans un résonateur de Helmholtz selon l'invention permet notamment d'éviter l'accumulation, dans le ou chaque résonateur, d'huile chaude et de poussières entraînées par le fluide en provenance du moteur et se condensant au contact des parois, accumulation qui forme à la longue un dépôt solide pâteux réduisant le volume utile de la chambre correspondante et pénalisant ainsi l'atténuation acoustique. En d'autres termes, cette évacuation par gravité des condensats que procure le dispositif d'atténuation selon l'invention permet ainsi de pérenniser les performances acoustiques du ou de chaque résonateur de Helmholtz qu'il comprend.

On notera également que le ou chaque orifice d'évacuation agencé selon l'invention permet en outre d'influencer avantageusement cette atténuation acoustique, en décalant vers les hautes fréquences la bande de fréquences qui correspond, sur la courbe d'atténuation acoustique, à une plage d'atténuation acoustique avec un niveau égal ou supérieur à un seuil donné (typiquement 20 dB).

On notera en outre que cette formation d'un seul tenant du couvercle avec les cloisons transversales et longitudinales de la ou de chaque chambre de résonance, remédie à l'inconvénient précité de l'art antérieur relatif à la soudure entre parties plastiques, ce qui évite la pollution du dispositif lors du soudage et rend ce dernier parfaitement étanche à l'air au niveau du couvercle. De plus, cette structure monobloc permet de simplifier le procédé de fabrication du dispositif selon l'invention et donc de réduire son coût de mise en oeuvre.

Selon une autre caractéristique de l'invention, le boîtier et le couvercle peuvent être formés d'un seul tenant avec un conduit radialement externe de la structure de conduite en formant un ensemble monobloc réalisé en une matière plastique de préférence par injection ou par soufflage, au moins une bague métallique anti-fluage qui est pourvue de ladite ou de chaque ouverture de passage et dudit ou de chaque orifice d'évacuation pouvant être insérée contre la face radialement interne de ce conduit pour lui permettre de résister aux températures élevées de fonctionnement, de telle sorte que le fluide circulant à l'intérieur de la ou de chaque bague communique directement avec la ou chaque chambre en regard.

Avantageusement, la ou les bague(s) anti-fluage est (sont) insérable(s) à force contre la face radialement interne du conduit sur sensiblement toute la longueur axiale de ce conduit. En d'autres termes, dans le cas où l'on utilise une unique bague anti-fluage, celle-ci peut s'étendre quasiment sur toute la longueur axiale du dispositif alors que dans une variante de l'invention à deux bagues anti-fluages coaxiales mises bout à bout, les extrémités opposées de ces deux bagues peuvent coïncider sensiblement avec celles du dispositif.

Selon une autre caractéristique de l'invention, ledit ou chaque orifice d'évacuation peut être formé en un coin de la chambre correspondante qui est destiné à former le point le plus bas de celle-ci à l'état monté dans ladite ligne d'admission (i.e. la zone la plus inférieure en fonctionnement de ladite paroi formant le fond de la chambre).

On comprendra ainsi que la ou chaque chambre pourrait par exemple présenter non pas un, mais deux orifices d'évacuation identiques qui seraient formés axialement à l'opposé l'un de l'autre sur ladite paroi et dont l'un ou l'autre permettrait l'évacuation des condensats, selon sa position due à l'orientation de la structure de conduite une fois intégrée à la ligne d'admission.

On notera que le dispositif d'atténuation selon l'invention permet en particulier de générer des pertes de charge réduites pour le fluide y circulant ce qui contribue à améliorer les performances du moteur, en comparaison des dispositifs d'atténuation connus à deux chambres annulaires de résonance qui génèrent des pertes de charge plus élevées.

Selon une autre caractéristique de l'invention, ladite ou chaque chambre peut être de préférence agencée radialement à l'extérieur et axialement à l'intérieur de ladite structure de conduite. A titre encore plus préférentiel, ladite ou chaque chambre de résonance peut présenter sensiblement une forme de parallélépipède rectangle tronqué par ladite paroi.

Avantageusement, ledit ou chaque orifice d'évacuation peut présenter une section de passage qui est inférieure à celle de ladite ou chaque ouverture de passage pour le fluide et qui présente de préférence une forme sensiblement circulaire.

Selon une autre caractéristique de l'invention, ladite ou chaque ouverture de passage pour le fluide présente alors de préférence une forme de fente oblongue en arc de cercle qui s'étend transversalement à cette direction axiale, sensiblement de l'une de ces parois longitudinales à l'autre.

Ladite ou chaque chambre peut par exemple comporter deux ouvertures de passage parallèles qui sont formées en une zone axialement médiane pour cette chambre, et un unique orifice d'évacuation qui est de préférence distant de l'ouverture la plus proche d'une distance axiale supérieure à celle séparant les deux ouvertures entre elles.

Selon une autre caractéristique de l'invention, ce dispositif d'atténuation peut comprendre au moins une rangée desdites chambres de résonance qui se succèdent dans la direction axiale de ladite structure de conduite, les deux chambres d'extrémité de la ou chaque rangée pouvant être respectivement délimitées axialement par deux cloisons transversales d'extrémité qui relient ces deux parois longitudinales entre elles en formant avec elles ledit boîtier qui est fermé par ledit couvercle.

On notera que le dispositif d'atténuation selon l'invention peut ainsi avantageusement comporter un nombre élevé de résonateurs de Helmhotz pour un encombrement relativement réduit, notamment en comparaison des dispositifs d'atténuation connus à chambres annulaires de résonance, tout en étant adaptable à tout environnement pour son montage dans une ligne d'admission.

Une ligne d'admission selon l'invention d'un moteur thermique à combustion interne, tel qu'un moteur turbocompressé pour véhicule automobile, comporte au moins un dispositif d'atténuation acoustique selon l'invention tel que défini ci-dessus, dans lequel ledit ou chaque orifice d'évacuation est formé en un coin inférieur de la chambre de résonance correspondante pour permettre l'évacuation par gravité desdits condensats par cet orifice.

Comme indiqué précédemment, une utilisation préférentielle selon l'invention de ce dispositif d'atténuation acoustique consiste à atténuer les bruits de souffle et/ou de sifflements d'un moteur thermique à combustion interne, tel qu'un moteur turbocompressé pour véhicule automobile.

Ces bruits de souffle atténués par le dispositif de l'invention concernent notamment une plage de fréquences allant de 1300 à 2000 Hz. Quant à ces bruits de sifflements, ils se réfèrent en particulier à une plage de fréquences pouvant varier de 2500 à 3500 Hz environ.

D'autres avantages, caractéristiques et détails de l'invention ressortiront du complément de description qui va suivre en référence à des dessins annexés, donnés uniquement à titre d'exemples et dans lesquels :
la figure 1 est une vue de côté, en perspective et en écorché, d'un dispositif d'atténuation acoustique selon un exemple de réalisation de l'invention,
la figure 2 est une vue de dessus et en perspective montrant l'intérieur des chambres de résonance du dispositif de la figure 1 (i.e. sans le couvercle surmontant ces chambres), et
la figure 3 est une vue schématique en section axiale d'un dispositif d'atténuation acoustique selon un autre exemple de l'invention, dans une position de raccordement à la ligne d'admission d'air du moteur.

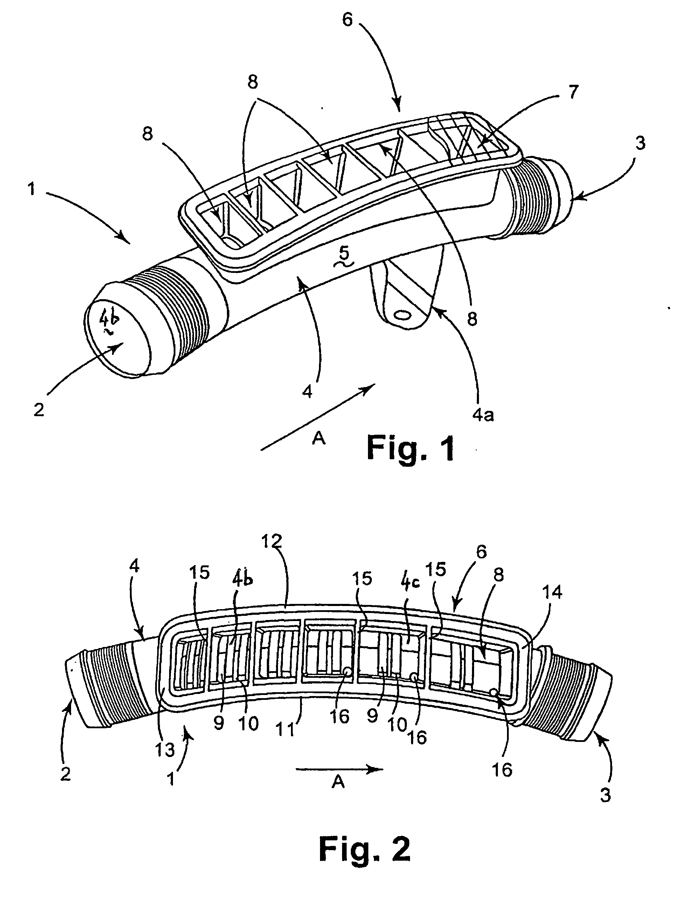

Le dispositif d'atténuation acoustique 1 qui est illustré aux figures 1 et 2 est destiné à être intégré à une ligne d'admission d'air d'un moteur turbocompressé pour véhicule automobile, via ses deux extrémités respectives de raccordement 2 et 3 pour l'entrée et la sortie d'air sous pression. Ce dispositif 1 comporte essentiellement :
- un ensemble monobloc en matière plastique par exemple soufflée ou injectée comportant un conduit 4 en matière plastique qui présente une paroi tubulaire 5 globalement cylindrique se terminant par ces deux extrémités de raccordement 2 et 3 et qui est pourvue d'un support de fixation 4a, ce conduit se prolongeant d'un seul tenant par un boîtier 6 qui est fermé par un couvercle 7 et qui contient plusieurs chambres de résonance 8 - six dans cet exemple - formant autant de résonateurs de Helmholtz se succédant dans la direction axiale A de la conduite 4, et
- deux bagues métalliques anti-fluage 4b et 4c qui sont insérées à force contre la face radialement interne du conduit 4 en y étant positionnées coaxialement et bout à bout, de manière que les extrémités axialement externes opposées de ces bagues 4b et 4c coïncident avec ces deux extrémités 2 et 3 du dispositif 1 (seule une bague 4b est en partie visible à la figure 1, l'autre l'étant à la figure 2).

Comme visible à la figure 2, le boîtier 6 est formé d'un seul tenant avec la conduite 4 en la surmontant radialement vers l'extérieur, et les chambres de résonance 8 qu'il délimite communiquent chacune avec l'intérieur du conduit 4 par des fentes 9 et 10 formées de manière traversante dans la paroi de chaque bague 4b, 4c. Ce boîtier 6 présente une section sensiblement rectangulaire et est délimité par deux parois longitudinales 11 et 12 (qui s'étendent parallèlement à la direction axiale A de la conduite 4) reliées entre elles par deux parois ou cloisons transversales d'extrémité 13 et 14 et, dans cet exemple, par plusieurs cloisons intermédiaires 15. Ainsi, chaque chambre 8 présente sensiblement une forme de parallélépipède rectangle tronqué par la paroi de la bague correspondante 4b, 4c formant son fond et surmonté par le couvercle 7, et elle est délimitée par les deux parois longitudinales 11 et 12 et par deux cloisons transversales 13, 14, 15 (perpendiculaires à cette direction axiale A).

Chaque chambre 8 présente par exemple une paire de fentes oblongues 9 et 10 parallèles pour le passage de l'air qui sont formées transversalement en son fond par la bague 4b, 4c, en une zone axialement médiane pour cette chambre 8. Chaque fente transversale 9, 10 présente de préférence une forme en arc de cercle qui s'étend sensiblement de l'une des parois longitudinales 11 à l'autre 12.

Selon l'invention, chaque chambre 8 forme non seulement un ensemble monobloc (couvercle 7 inclus) avec le conduit 4, mais elle comprend en outre en son fond, en plus des fentes 9 et 10 permettant la circulation de l'air issu du conduit 4, au moins un orifice 16 apte à évacuer par gravité l'huile condensée et les poussières dont l'air est chargé et qui viennent se loger en fonctionnement dans chaque chambre 8. Plus précisément, cet orifice 16 est formé dans la bague 4b, 4c à proximité immédiate d'une extrémité de celle des deux cloisons transversales 14, 15 délimitant la chambre 8 qui est destinée à former son point le plus bas à l'état monté dans la ligne d'admission d'air (i.e. dans le coin le plus bas de la chambre 8 en fonctionnement).

Comme visible à la figure 2, l'orifice d'évacuation 16 de chaque chambre 8 présente de préférence une forme circulaire et une section de passage qui est très réduite en comparaison de celle de chaque fente 9, 10, et cet orifice 16 est avantageusement distant de la fente 10 la plus proche d'une distance axiale supérieure à celle séparant les deux fentes 9 et 10 entre elles.

Comme indiqué précédemment, ces orifices d'évacuation 16 permettent, d'une part, d'éviter la formation dans chaque résonateur 8 d'un dépôt solide d'huile et de poussières réduisant son volume utile, pérennisant ainsi les performances acoustiques obtenues et, d'autre part, d'influencer l'atténuation acoustique en décalant vers les hautes fréquences la bande correspondant à une plage d'atténuation acoustique avec un niveau égal ou supérieur à 20 dB, typiquement.

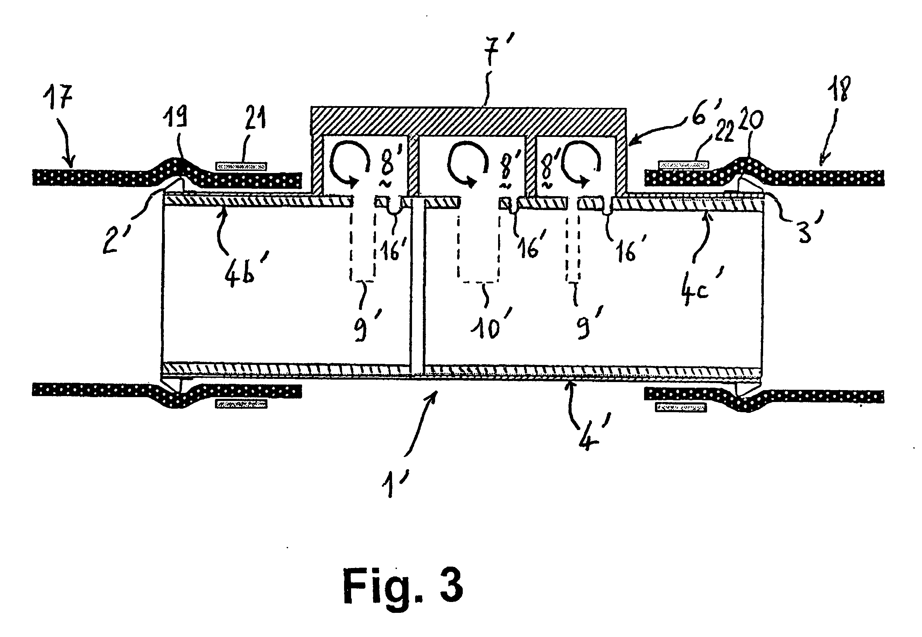

Le dispositif d'atténuation acoustique 1' de la figure 3 comporte deux bagues anti-fluage 4b' et 4c' analogues à celles des figures 1 et 2, étant rappelé qu'un dispositif selon l'invention pourrait comporter une seule bague anti-fluage s'étendant sur toute la longueur du conduit 4' en matière plastique. Ce dispositif 1' se différencie essentiellement de celui des figures 1 et 2 en ce que son boîtier 6' délimite non pas six mais trois chambres de résonance 8', mais qui est toujours formé d'un seul tenant avec le couvercle 7' le surmontant et avec le conduit 4'. On a représenté uniquement à titre d'exemple à la figure 3 une seule fente ou ouverture 9', 10' qui est formée à travers chaque bague 4b', 4c' au lieu des deux fentes 9 et 10 précédentes et qui permet de faire communiquer l'intérieur de chaque bague 4b', 4c' avec les chambres 8', étant précisé que l'orifice d'évacuation par gravité des condensats 16' peut être analogue à l'orifice 16 de la figure 2 ou bien être de géométrie différente (par exemple non circulaire). On a utilisé pour la clarté de la figure 3 des pointillés pour représenter schématiquement les ouvertures 9', 10' et les orifices 16' qui sont pratiqués dans les deux bagues anti-fluage 4b' et 4c'.

Est également illustré à la figure 3 le raccordement du dispositif 1' selon l'invention à la ligne d'admission d'air du moteur, par l'intermédiaire de deux tuyaux en caoutchouc 17 et 18 dans lesquels on emmanche respectivement les deux extrémités de raccordement 2' et 3' du conduit 4', chaque extrémité 2' et 3' formant dans cet exemple un bulbe 19, 20 venant déformer radialement le tuyau 17, 18. Deux colliers de serrage 21 et 22 sont respectivement appliqués autour des tuyaux 17 et 18, axialement en amont des bulbes 19 et 20.

## Revendications

1. Dispositif d'atténuation acoustique (1, 1') pour une ligne d'admission d'un moteur thermique à combustion interne, tel qu'un moteur turbocompressé pour véhicule automobile, ce dispositif étant destiné à être parcouru par un fluide gazeux sous pression et comportant :
- une structure de conduite (4, 4', 4b, 4c, 4b', 4c') qui présente une paroi tubulaire (5, 4b, 4c, 4b', 4c') se terminant par deux extrémités respectivement d'entrée (2) et de sortie (3) du fluide aptes à être intégrées à ladite ligne d'admission, et
- au moins une chambre de résonance (8, 8') formant résonateur de Helmholtz qui est agencée à l'extérieur de cette structure de conduite et qui communique avec celle-ci par au moins une ouverture (9, 10, 9', 10') formée dans ladite paroi (4b, 4c, 4b', 4c') pour le passage du fluide, la ou chaque chambre étant délimitée axialement par deux cloisons (15 ou 13, 14) sensiblement transversales à la direction axiale (A) de cette structure,
**caractérisé en ce que** la ou chaque chambre de résonance comprend en outre au moins un orifice d'évacuation par gravité (16, 16') de condensats entraînés par le fluide, tels que de l'huile, lequel orifice est formé dans ladite paroi (4b, 4c, 4b', 4c') à proximité immédiate de l'une desdites cloisons transversales (14 ou 15), la ou chaque chambre étant délimitée transversalement par deux parois longitudinales (11 et 12) qui s'étendent parallèlement à la direction axiale de la structure et qui sont reliées entre elles par ces cloisons transversales en formant un boîtier (6, 6') qui est fermé de manière étanche au fluide par un couvercle (7, 7') formé d'un seul tenant avec ce boîtier.

2. Dispositif (1, 1') selon la revendication 1, **caractérisé en ce que** ledit boîtier (6, 6') et ledit couvercle (7, 7') sont formés d'un seul tenant avec un conduit (4, 4') radialement externe de ladite structure de conduite (4, 4', 4b, 4c, 4b', 4c') en formant un ensemble monobloc réalisé en une matière plastique, au moins une bague métallique anti-fluage (4b, 4c, 4b', 4c') qui est pourvue de ladite ou de chaque ouverture de passage (9, 10, 9', 10') et dudit ou de chaque orifice d'évacuation (16, 16') étant insérée contre la face radialement interne de ce conduit pour lui permettre de résister aux températures élevées de fonctionnement, de telle sorte que le fluide circulant à l'intérieur de la ou de chaque bague communique directement avec la ou chaque chambre (8, 8') en regard.

3. Dispositif (1, 1') selon la revendication 2, **caractérisé en ce que** ladite ou lesdites bague(s) anti-fluage (4b, 4c, 4b', 4c') est (sont) insérée(s) à force contre la face radialement interne dudit conduit (4, 4') sur sensiblement toute la longueur axiale de ce conduit.

4. Dispositif (1, 1') selon une des revendications précédentes, **caractérisé en ce que** ledit ou chaque orifice d'évacuation (16, 16') est formé en un coin de la chambre correspondante (8, 8') qui est destiné à former le point le plus bas de celle-ci à l'état monté dans ladite ligne d'admission.

5. Dispositif (1, 1') selon la revendication 4, **caractérisé en ce que** ladite ou chaque chambre (8, 8') est agencée radialement à l'extérieur et axialement à l'intérieur de ladite structure de conduite (4, 4', 4b, 4c, 4b', 4c') en présentant sensiblement une forme de parallélépipède rectangle tronqué par ladite paroi (4b, 4c, 4b', 4c').

6. Dispositif (1, 1') selon une des revendications précédentes, **caractérisé en ce que** ledit ou chaque orifice d'évacuation (16, 16') présente une section de passage qui est inférieure à celle de ladite ou chaque ouverture de passage (9, 10, 9', 10') pour le fluide et qui présente de préférence une forme sensiblement circulaire.

7. Dispositif (1, 1') selon une des revendications précédentes, **caractérisé en ce que** ladite ou chaque ouverture de passage (9, 10, 9', 10') pour le fluide présente une forme de fente oblongue en arc de cercle qui s'étend transversalement à cette direction axiale (A), sensiblement de l'une de ces parois longitudinales (11) à l'autre (12).

8. Dispositif (1) selon la revendication 7, **caractérisé en ce que** ladite ou chaque chambre (8) comporte deux ouvertures de passage (9 et 10) parallèles qui sont formées en une zone axialement médiane pour cette chambre, et un unique orifice d'évacuation (16, 16') qui est de préférence distant de l'ouverture la plus proche (10) d'une distance axiale supérieure à celle séparant ces deux ouvertures entre elles.

9. Dispositif (1, 1') selon une des revendications précédentes, **caractérisé en ce qu'**il comprend au moins une rangée desdites chambres de résonance (8, 8') qui se succèdent dans la direction axiale (A) de la structure de conduite (4, 4', 4b, 4c, 4b', 4c'), les deux chambres d'extrémité de ladite ou de chaque rangée étant respectivement délimitées axialement par deux cloisons transversales d'extrémité (13 et 14) qui relient ces deux parois longitudinales (11 et 12) entre elles en formant avec elles ledit boîtier (6, 6') surmonté dudit couvercle (7, 7').

10. Ligne d'admission d'un moteur thermique à combustion interne, tel qu'un moteur turbocompressé pour véhicule automobile, **caractérisée en ce qu'**elle comporte au moins un dispositif d'atténuation acoustique (1, 1') selon une des revendications précédentes, dans lequel ledit ou chaque orifice d'évacuation (16, 16') est formé en un coin inférieur de la chambre de résonance (8, 8') correspondante pour permettre l'évacuation par gravité desdits condensats par cet orifice.

11. Utilisation d'un dispositif d'atténuation acoustique (1, 1') selon une des revendications 1 à 9 pour atténuer les bruits de souffle et/ou de sifflements d'un moteur thermique à combustion interne, tel qu'un moteur turbocompressé pour véhicule automobile.

## Claims

1. Acoustic attenuation device (1, 1') for an intake line of an internal combustion engine, such as a turbo charged engine for a motor vehicle, this device being intended to have a flow of pressurized gaseous fluid passing through it and comprising:
- a conduit structure (4, 4', 4b, 4c, 4b' 4c') which has a tubular wall (5, 4b, 4c, 4b', 4c') ending in two ends, these respectively being the fluid inlet (2) and fluid outlet (3) ends, which are able to be incorporated into said intake line, and
- at least one resonance chamber (8, 8') forming a Helmholtz resonator which is arranged on the outside of this conduit structure and which communicates therewith via at least one opening (9, 10, 9' 10') formed in said wall (4b, 4c, 4b', 4c') for the passage of the fluid, the or each chamber being axially delimited by two partitions (15 or 13, 14) substantially transverse to the axial direction (A) of this structure,
**characterized in that** the or each resonance chamber further comprises at least one gravity discharge orifice (16, 16') for discharging condensate carried along by the fluid, such as oil, which orifice is formed in said wall (4b, 4c, 4b', 4c') in the immediate vicinity of one of said transverse partitions (14 or 15), the or each chamber being transversely delimited by two longitudinal walls (11 and 12) which run parallel to the axial direction of the structure and are joined together by these transverse partitions thereby forming a housing (6, 6') which is closed off in a fluidtight manner by a cover (7, 7') formed as one piece with this housing.

2. Device (1, 1') according to Claim 1, **characterized in that** said housing (6, 6') and said cover (7, 7') are formed as one piece with a radially external duct (4, 4') of said conduit structure (4, 4', 4b, 4c, 4b', 4c') thereby forming a one-piece assembly made of a plastic, at least one anti-creep metal ring (4b, 4c, 4b', 4c') which is provided with said or each passage opening (9, 10, 9', 10') and with said or each discharge orifice (16, 16') being inserted against the radially internal face of this duct to allow it to withstand high operating temperatures, such that the fluid flowing along the inside of the or each ring communicates directly with the or each chamber (8, 8') opposite.

3. Device (1, 1') according to Claim 2, **characterized in that** said anti-creep ring(s) (4b, 4c, 4b', 4c') is(are) forcibly inserted against the radially internal face of said duct (4, 4') over substantially the entire axial length of this duct.

4. Device (1, 1') according to one of the preceding claims, **characterized in that** said or each discharge orifice (16, 16') is formed in a corner of the corresponding chamber (8, 8'), which corner is intended to form the lowermost point of the chamber when said chamber is mounted in said intake line.

5. Device (1, 1') according to Claim 4, **characterized in that** said or each chamber (8, 8') is arranged radially on the outside of and axially on the inside of said conduit structure (4, 4', 4b, 4c, 4b', 4c') having substantially the shape of a rectangular parallelepiped truncated by said wall (4b, 4c, 4b', 4c').

6. Device (1, 1') according to one of the preceding claims, **characterized in that** said or each discharge orifice (16, 16') has a bore section which is smaller than that of said or each passage opening (9, 10, 9', 10') for the fluid and which preferably is of substantially circular shape.

7. Device (1, 1') according to one of the preceding claims, **characterized in that** said or each passage opening (9, 10, 9', 10') for the fluid has the shape of an oblong slot formed into an arc of a circle which runs transversally to this axial direction (A), substantially from one of these longitudinal walls (11) to the other (12).

8. Device (1) according to Claim 7, **characterized in that** said or each chamber (8) comprises two parallel passage openings (9 and 10) which are formed in an axially middle region of this chamber, and one single discharge orifice (16, 16') which is preferably distant from the nearest opening (10) by an axial distance that is greater than the distance separating these two openings from one another.

9. Device (1, 1') according to one of the preceding claims, **characterized in that** it comprises at least one row of said resonance chambers (8, 8') which follow on from one another in the axial direction (A) of the conduit structure (4, 4', 4b, 4c, 4b', 4c'), the two end chambers of said or each row being respectively axially delimited by two transverse end partitions (13 and 14) which connect these two longitudinal walls (11 and 12) together thereby forming therewith said housing (6, 6') surmounted by said cover (7, 7').

10. Intake line for an internal combustion engine, such as a turbocharged engine for a motor vehicle, **characterized in that** it comprises at least one acoustic attenuation device (1, 1') according to one of the preceding claims, in which said or each discharge orifice (16, 16') is formed in a lower corner of the corresponding resonance chamber (8, 8') to allow said condensate to be discharged by gravity through this orifice.

11. Use of an acoustic attenuation device (1, 1') according to one of claim 1 to 9 to attenuate hissing and/or whistling noises of an internal combustion engine, such as a turbocharged engine for a motor vehicle.

## Patentansprüche

1. Vorrichtung (1, 1') zur akustischen Dämpfung für eine Zuleitung eines Verbrennungsmotors, wie zum Beispiel ein Motor mit Turbokompression für ein Automobil, wobei diese Vorrichtung dazu bestimmt ist, von einem unter Druck stehenden gasartigen Fluid durchlaufen zu werden und umfasst:
- eine Leitungsstruktur (4, 4', 4b, 4c, 4b', 4c'), welche eine röhrenartige Wand (5, 4b, 4c, 4b', 4c') aufweist, welche in zwei Enden zum Eingang (2) und Ausgang (3) des Fluids endet, welche dazu ausgestaltet sind, in die Zuleitung integriert zu werden, und
- wenigstens eine Resonanzkammer (8, 8'), welche einen Helmholtz-Resonator bildet, welcher an dem äußeren dieser Leitungsstruktur angeordnet ist und welcher mit dieser über eine Öffnung (9, 10, 9', 10') kommuniziert, welche in der Wand (4b, 4c, 4b', 4c') zum Durchlass des Fluids ausgebildet ist, wobei die oder jede Kammer axial durch zwei im Wesentlichen zu der axialen Richtung (A) dieser Struktur transversale Trennwände begrenzt ist,
**dadurch gekennzeichnet, dass** die oder jede Resonanzkammer außerdem wenigstens eine Öffnung zur Entleerung durch Schwerkraft (16, 16') von durch das Fluid mitgeführten Kondensaten, wie zum Beispiel Öl, umfasst, wobei die Öffnung in der Wand (4b, 4c, 4b', 4c') in unmittelbarer Nähe einer der transversalen Trennwände (14 oder 15) ausgebildet ist, wobei die oder jede Kammer transversal durch zwei longitudinale Wände (11 und 12) begrenzt ist, welche sich parallel zu der axialen Richtung der Struktur erstrecken und miteinander durch die transversalen Trennwände verbunden sind und ein Gehäuse (6, 6') bilden, welches auf gegenüber dem Fluid dichte Weise durch einen Deckel (7, 7') verschlossen ist, welcher mit diesem Gehäuse aus einem Stück gebildet ist.

2. Vorrichtung (1, 1') nach Anspruch 1, **dadurch gekennzeichnet, dass** das Gehäuse (6, 6') und der Deckel (7, 7') mit einer Leitung (4, 4') radial außen an der Struktur der Leitung (4, 4', 4b, 4c, 4b', 4c') aus einem Stück gebildet sind, wobei eine einstückige Einheit gebildet wird, welche aus einem Kunststoffmaterial realisiert ist, wobei wenigstens ein metallischer Antikriechring (4b, 4c, 4b', 4c'), welcher mit der oder jeder Durchgangsöffnung (9, 10, 9', 10') und der oder jeder Entleerungsöffnung (16, 16') versehen ist, an der radial inneren Seite dieser Leitung eingesetzt ist, um ihr zu ermöglichen hohen Betriebstemperaturen zu widerstehen, sodass das im Inneren der oder jedes Rings zirkulierende Fluid direkt mit der Ringe oder jeder gegenüberliegenden Kammer (8, 8') kommuniziert.

3. Vorrichtung (1, 1') nach Anspruch 2, **dadurch gekennzeichnet, dass** der Antikriechring oder die Antikriechringe (4b, 4c, 4b', 4c') kraftschlüssig an der radial inneren Seite der Leitung (4, 4') auf im Wesentlichen der gesamten axialen Länge dieser Leitung eingesetzt ist beziehungsweise sind.

4. Vorrichtung (1, 1') nach einem der vorhergehenden Ansprüche, **dadurch gekennzeichnet, dass** die oder jede Entleerungsöffnung (16, 16') an einer Ecke der entsprechenden Kammer (8, 8') ausgebildet ist, welche dazu bestimmt ist, im montierten Zustand der Zuleitung den tiefsten Punkt derselben zu bilden.

5. Vorrichtung (1, 1') nach Anspruch 4, **dadurch gekennzeichnet, dass** die oder jede Kammer (8, 8') radial an der Au-βenseite und axial an der Innenseite der Leitungsstruktur (4, 4', 4b, 4c, 4b', 4c') angeordnet ist und im Wesentlichen eine Form eines rechtwinkligen Parallelepipeds, welches von der Wand (4b, 4c, 4b', 4c') trunkiert ist, aufweist.

6. Vorrichtung (1, 1') nach einem der vorhergehenden Ansprüche, **dadurch gekennzeichnet, dass** die oder jede Entleerungsöffnung (16, 16') einen Durchgangsquerschnitt aufweist, welcher geringer ist als derjenige der oder jeder Durchlassöffnung (9, 10, 9', 10') für das Fluid und welcher bevorzugt eine im Wesentlichen kreisförmige Form aufweist.

7. Vorrichtung (1, 1') nach einem der vorhergehenden Ansprüche, **dadurch gekennzeichnet, dass** die oder jede Durchlassöffnung (9, 10, 9', 10') für das Fluid eine Form eines länglichen Kreisbogenschlitzes aufweist, welcher sich transversal zu der axialen Richtung (A), im Wesentlichen von einer der longitudinalen Wände (11) zu der anderen (12) erstreckt.

8. Vorrichtung (1) nach Anspruch 7, **dadurch gekennzeichnet, dass** die oder jede Kammer (8) zwei parallele Durchlassöffnungen (9 und 10), welche an einem axialen Mittelbereich für diese Kammer ausgebildet sind, und eine einzige Entleerungsöffnung (16, 16') umfasst, welche bevorzugt von der nächstgelegenen Öffnung (10) um einen Abstand beabstandet ist, welcher größer ist als derjenige, welcher die zwei Öffnungen voneinander trennt.

9. Vorrichtung (1, 1') nach einem der vorhergehenden Ansprüche, **dadurch gekennzeichnet, dass** sie wenigstens eine Reihe der Resonanzkammern (8, 8') umfasst, welche in der axialen Richtung (A) der Leitungsstruktur (4, 4', 4b, 4c, 4b', 4c') aufeinander folgen, wobei die zwei Endkammern der oder jeder Reihe jeweils axial begrenzt sind durch zwei transversale Endtrennwände (13 und 14), welche die zwei longitudinalen Wände (11 und 12) miteinander verbinden und mit ihnen das Gehäuse (6, 6') bilden, auf welchem der Deckel (7, 7') angebracht ist.

10. Zuleitung eines Verbrennungsmotors, wie zum Beispiel eines Motors mit Turbokompression für ein Automobil, **dadurch gekennzeichnet, dass** sie wenigstens eine Vorrichtung (1, 1') zur akustischen Dämpfung nach einem der vorhergehenden Ansprüche aufweist, bei welcher die oder jede Entleerungsöffnung (16, 16') an einer unteren Ecke der entsprechenden Resonanzkammer (8, 8') ausgebildet ist, um die Entleerung der Kondensate durch Schwerkraft durch diese Öffnung zu ermöglichen.

11. Nutzung einer Vorrichtung (1, 1') zur akustischen Dämpfung gemäß einem der Ansprüche 1-9 zur Dämpfung von Rausch- und/oder Pfeifgeräuschen eines Verbrennungsmotors, wie zum Beispiel eines Motors mit Turbokompression für ein Automobil.
